# EUROPEAN PATENT SPECIFICATION

(11) **EP 1 650 913 B1**
(45) Date of publication and mention of the grant of the patent: **27.10.2010**
(21) Application number: 05255761.8
(22) Date of filing: 16.09.2005
(51) Int. Cl.: H04W 28/06

(54) **Method and apparatus for transmitting and receiving data via wireless universal serial bus (USB)**
Verfahren und Vorrichtung zum Senden und Empfangen von Daten über einen universellen seriellen Bus (USB)
Méthode et dispositif pour transmettre et recevoir des données sur un Bus seriel universel (USB)

(30) Priority: 20.10.2004 KR 2004083977
(43) Date of publication of application: 26.04.2006
(73) Proprietor: Samsung Electronics Co., Ltd., Suwon-si, Gyeonggi-do (KR)
(72) Inventor: Sung, Hyun-ah, Gwanak-gu Seoul (KR); Bae, Dae-gyu, Yeongtong-gu Suwon-si Gyeonggi-do (KR); Hong, Jin-woo, Suwon-si Gyeonggi-do (KR)
(74) Representative: Waddington, Richard

(56) References cited:
- EP-A- 1 443 784
- WO-A-01/17171
- JP-A- 2001 358 733
- US-A- 5 684 954
- US-A- 6 028 844
- US-A1- 2003 065 817
- US-A1- 20020 065 907
- CAI, GUO, YAO: "A Novel Design of IEEE 802.15.3 MAC over UWB" , XP10790417

## Description

The present invention relates to a method of and an apparatus for transmitting and receiving data, and more particularly, to a method of and an apparatus for transmitting and receiving data via a wireless universal serial bus (WUSB).

A universal serial bus (USB) is a common interface standard for accessing peripheral devices and personal computers. Recently, the application fields of the USB have been broadened to even consumer electronics and mobile devices. As the wireless communication environment continues to develop, even conventional wired communication standards are being forced to support wireless communications. For these reasons, approaches to establish a wireless USB standard are being made to support wireless communications using a conventional USB port.

In these approaches, the WUSB standard borrows a media access control structure and a physical layer structure from the IEEE 802.15.3 or the multi-band Orthogonal Frequency Division Multiplexing (OFDM) alliance (MBOA) without making changes thereto to allow a conventional USB port to have a wireless communication function though some of the fields are not actually used. As a result of transmitting fields that are hardly used, a transmission delay may occur when transmitting the fields that are actually used, and limited communication resources may be wasted.

US 5,684,954 discloses a system of concatenating multiple protocol headers preceding a data stream.

US 2002/65907 discloses a system for payload header suppression in a packet sequence.

The present invention provides methods and apparatuses for transmitting and receiving data via a WUSB in which unused fields are not transmitted. In addition, the present invention provides a computer readable recording medium having a program for executing the aforementioned methods.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates a WUSB micro-scheduled stream;
FIG. 2 illustrates a conventional WUSB data packet format;
FIG. 3 illustrates a WUSB data packet format according to an exemplary embodiment of the present invention;
FIG. 4 illustrates a data transmission/ reception apparatus according to an exemplary embodiment of the present invention;
FIG. 5 illustrates a service access point (SAP) 413 according to an exemplary embodiment of the present invention;
FIG. 6 illustrates a data transmission method according to an exemplary embodiment of the present invention; and
FIG. 7 illustrates a data reception method according to an exemplary embodiment of the present invention.

Hereinafter, exemplary embodiments according to the present invention will be described in detail with reference to the accompanying drawings.

The wireless universal serial bus (WUSB) standard was originally established based on a media access control (MAC) structure of the IEEE 802.15.3 standard, but is currently being modified based on a MAC layer of a multi-band OFDM alliance (MBOA) standard. However, its basic concept has not considerably changed. Although the following embodiments will be described based on a MAC structure of the IEEE 802.15.3 standard, those skilled in the art would appreciate that the present invention can be embodied in other standards such as the MBOA standard.

The IEEE 802.15.3 defines a wireless personal area network (WPAN), called a Piconet, consisting of a plurality of devices. One of the devices included in the Piconet is designated as a Piconet Coordinator (PNC). The PNC manages timing, quality of service (QOS), and power in the Piconet. The WUSB specification based on IEEE 802.15.3 requires that the WUSB host be a PNC having a micro-scheduling functionality. For example, the WUSB host may be a personal computer, and the WUSB device may be a peripheral device such as a keyboard, a mouse, and a digital camera. Each WUSB device uses a WUSB identification element (IE) to identify the WUSB host.

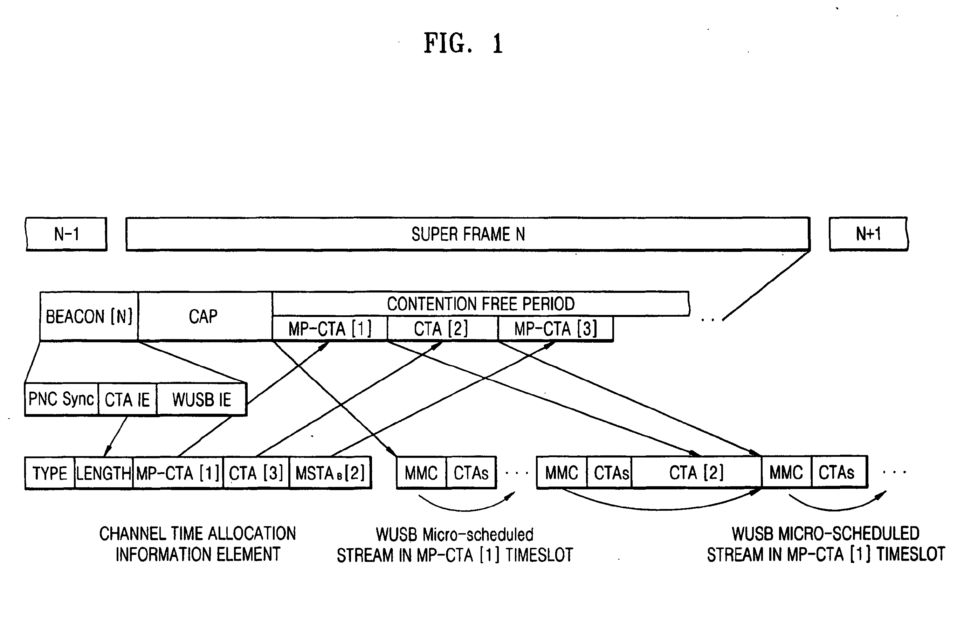

FIG. 1 is a packet diagram illustrating a WUSB micro-scheduled stream.

Referring to FIG. 1, the IEEE 802.15.3-based WUSB micro-scheduled stream includes a plurality of super-frames. The super-frame is a basic time-division unit in IEEE 802.15.3, and consists of a beacon, a contention access period (CAP), and a contention free period (CFP).

The beacon is used to set timing allocations and deliver the WUSB IE. The CAP is used to deliver commands, asynchronous data, etc. The CFP includes a micro-scheduled private channel time allocation (MP-CTA) and a channel time allocation (CTA). The MP-CTA includes a micro-scheduled management command (MMC) and the CTAs specified in the MMC. Each MMC retains a timing value representing a starting time of a next MMC. The CTA is used to deliver commands, isochronized streams, etc.

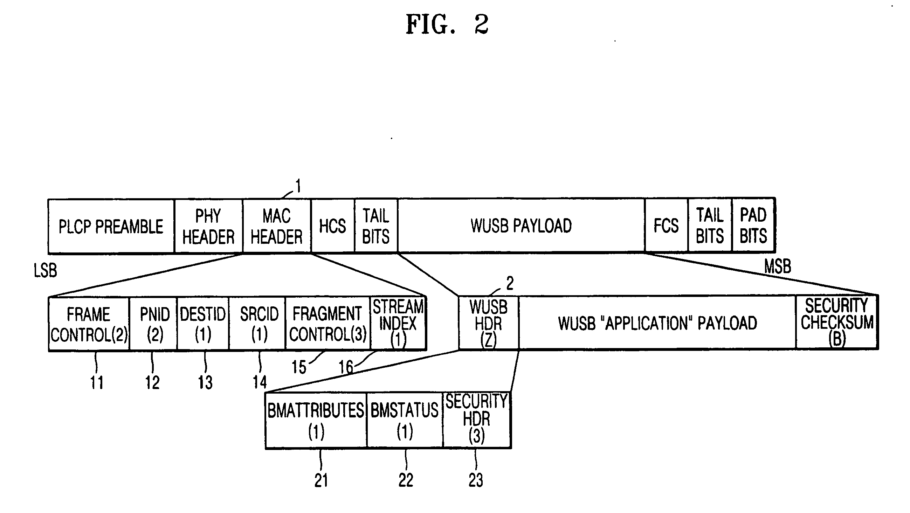

FIG. 2 is a packet diagram illustrating a conventional WUSB data packet format.

Referring to FIG. 2, a conventional WUSB data packet according to a WUSB specification includes a physical layer convergence protocol (PLCP) preamble field, a physical header, a MAC header 1, a header check sequence (HCS) field, a tail bit field, a WUSB payload field, a frame check sequence (FCS) field, a tail bit field, and a pad bit field. The WUSB data packet format shown in FIG. 2 is applied to all packets transmitted in the context of the WUSB micro-scheduled stream except for the MMC packet.

The MAC header 1 includes a frame control field 11, a Piconet identification field 12, a destination identification field 13, a source identification field 14, a fragment control field 15, and a stream index field 16. Each parenthesized number denotes the corresponding field size measured in octet.

The format of the MAC header 1 is similar to that of the IEEE 802.15.3. This is because, as shown in FIG. 2, the MAC header format was borrowed from the IEEE 802.15.3 without changes during discussion of the WUSB specification. As a result, in the MAC header 1, most of the fields actually used for communications via the WUSB are the destination identification fields 13 and the source identification fields 14, whereas the other fields are hardly used.

Therefore, due to the fields that are nearly not used, a transmission delay may occur while transmitting the fields that are actually used, and limited communication resources may be wasted. This is a representative case showing a conventional problem.

The WUSB payload field includes a WUSB header 2, a WUSB application field, and a security checksum field. The WUSB header 2 includes a bitmap attribute field 21, a bitmap status field 22, and a security header 23. The parenthesized number denotes the corresponding field size measured in octets.

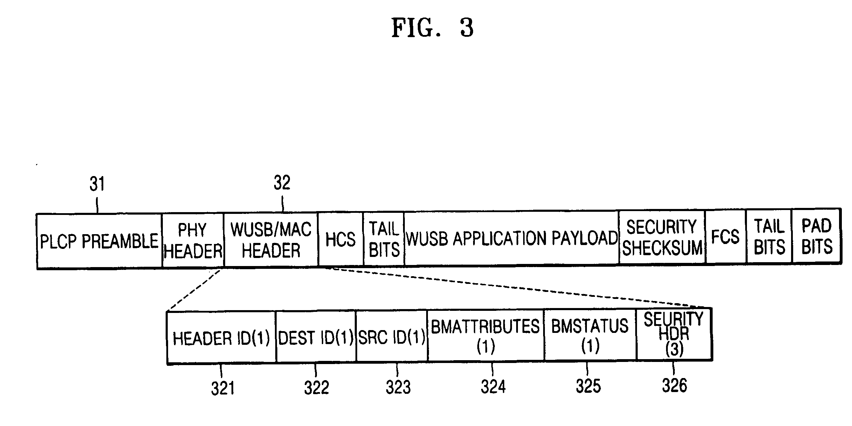

FIG. 3 is a packet diagram illustrating a WUSB data packet format according to an exemplary embodiment of the present invention.

Referring to FIG. 3, the WUSB data packet according to the present invention includes a PLCP preamble field 31, a physical header, a WUSB/MAC header 32, an HCS field, a tail bit field, a WUSB payload field, an FCS field, a tail bit field, and a pad bit field.

The PLCP preamble field 31 contains a value designating whether the corresponding WUSB data packet is a conventional WUSB data packet including the MAC header 1 and the WUSB header 2 or a present WUSB data packet including the WUSB/MAC header 32.

The WUSB/MAC header 32 is created by integrating the MAC header and the WUSB header, and includes a minimum number of fields necessary to receive and transmit data via the WUSB. The minimum number of fields needed are the header identification field 321, the destination identification field 322, the source identification field 323, the bitmap attribute field 324, the bitmap status field 325, and the security header 326, which are selected from the fields contained in the MAC header 1 and the WUSB header 2 shown in FIG. 2. Similarly, the parenthesized number denotes the corresponding field size measured in octets.

The header identification field 321 contains identification information for identifying the UWSB/MAC header. For example, since the first bit of the MAC header is typically set to zero, the WUSB/MAC header can be identified by setting the first bit of the header identification field 321 to one. Further, the WUSB/MAC header can be identified by setting the header identification field 321 to a number that is not used in the first byte of the MAC header.

The destination identification field 322 contains an address of a destination device. For example, if the source device is a WUSB device and the destination device is a WUSB host, the destination identification field 322 contains the address of the WUSB host.

The source identification field 323 contains the address of the source device. For example, if the source device is a WUSB device and the destination device is a WUSB host, the source identification field 323 contains the address of the WUSB device.

Zero^{th} through third bits in the bitmap attribute field 324 contain an endpoint number, and fourth through seventh bits contain a packet identification. The endpoint number is used to deliver specific data transmitted between the WUSB host and the WUSB device to a particular endpoint buffer, and the packet identification is used to identify a particular packet group.

A 0^{th} bit in the bitmap status field 325 contains information on a ready status of the endpoint. Specifically, a "1" in the 0^{th} bit position represents that the endpoint can receive and transmit data, and a "0" in this bit position represents that the endpoint cannot receive and transmit data. 1^{st} through 3^{rd} bits in the bitmap status field 325 contain a handshake code, and these bits are used only when the packet identification is a handshake packet. 4^{th} through 7^{th} bits in the bitmap status field 325 are reserved at this time.

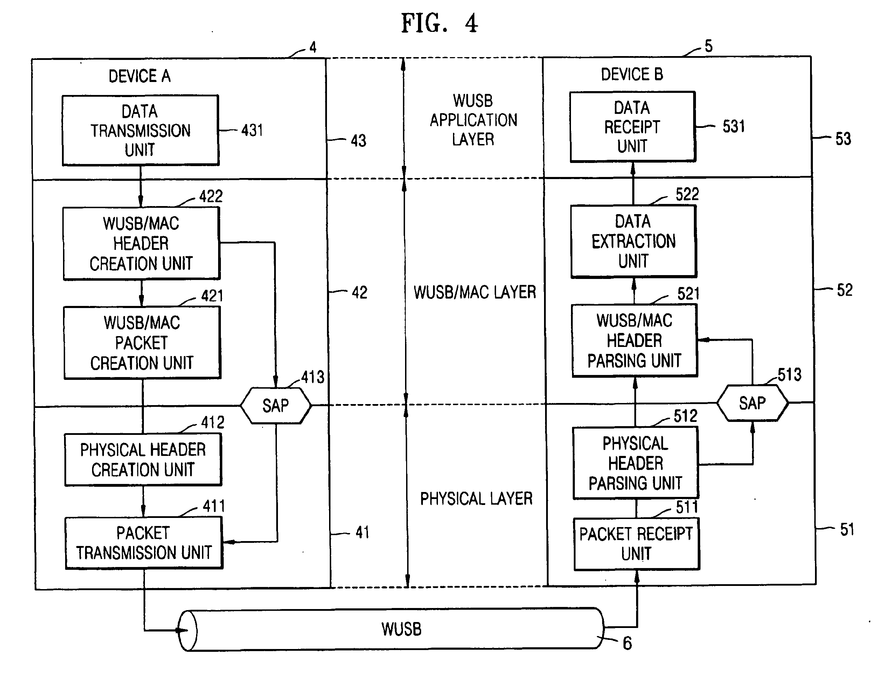

FIG. 4 is a block diagram illustrating a data receive/transmit apparatus according to an exemplary embodiment of the present invention.

Referring to FIG. 4, a device A includes a physical layer 41, a WUSB/MAC layer 42, and a WUSB application layer 43. The device A may be a WUSB host or a WUSB device. A data transmission device according to the present invention is installed in the device A, and includes a packet transmission unit 411 corresponding to a physical layer 41, a physical header creation unit 412, a service access point (SAP) 413, a WUSB/MAC packet creation unit 421 corresponding to a WUSB/MAC layer, a WUSB/MAC header creation unit 422, and a data transmission unit 431 corresponding to a WUSB application layer 43.

It would be apparent to those skilled in the art that other layers or elements can be included in addition to those shown in FIG. 4 in an actual implementation of this exemplary embodiment. For example, the data transmission device according to an exemplary of the present invention may further include elements for transmitting data using the conventional MAC header according to the IEEE 802.15.3.

The data transmission unit 431 outputs data and data transmission information to a lower layer by calling a data transmission function in the WUSB application layer 43. More specifically, the data transmission unit 431 outputs the data to the WUSB/MAC packet creation unit 421 corresponding to the WUSB/MAC layer 42, and outputs the data transmission information to the WUSB/MAC packet creation unit 421 and the WUSB/MAC header creation unit 422 corresponding to the WUSB/MAC layer 42.

The WUSB/MAC header creation unit 422 is created by integrating the MAC header and the WUSB header, and includes a minimum number of fields necessary to transmit data to the device B via the WUSB. That is, the WUSB/MAC header 32 includes the header identification field 321, the destination identification field 322, the source identification field 323, the bitmap attribute field 324, the bitmap status field 325, and the security header 326, which are selected from the fields contained in the MAC header 1 and the WUSB header 2 shown in FIG. 2. The WUSB/MAC header creation unit 422 creates the WUSB/MAC header 32 based on the data transmission information output from the data transmission unit 431. In addition, the WUSB/MAC header creation unit 422 sets the SAP 413 corresponding to the physical layer 41 by using information on the WUSB/MAC header 32.

The WUSB/MAC packet creation unit 421 establishes a WUSB application payload including the data output from the data transmission unit 431, creates a security checksum field, an FCS field, a tail bit field, and a pad bit field based on the data transmission information output from the data transmission unit 431, creates a WUSB/MAC packet based on the security checksum field, the FCS field, the tail bit field, and the pad bit field, and outputs the packet to a lower layer. More specifically, the WUSB/MAC packet creation unit 421 outputs the WUSB/MAC packet to the physical header creation unit 412 corresponding to a physical layer 41.

The physical header creation unit 412 creates a PLCP preamble field 31 and a physical header, and combines them with the WUSB/MAC packet output from the WUSB/MAC packet creation unit 421 to complete the WUSB data packet.

The packet transmission unit 411 transmits the WUSB data packet completed in the physical header creation unit 412 to the device B via a WUSB bus 6 with reference to the SAP 413 established by the WUSB/MAC header creation unit 422. The packet transmission unit 411 transmits a portion corresponding to the header in the WUSB data packet, i.e., a portion preceding the WUSB application payload with a high priority, and then transmits a portion corresponding to the payload including the WUSB application payload and the next portion.

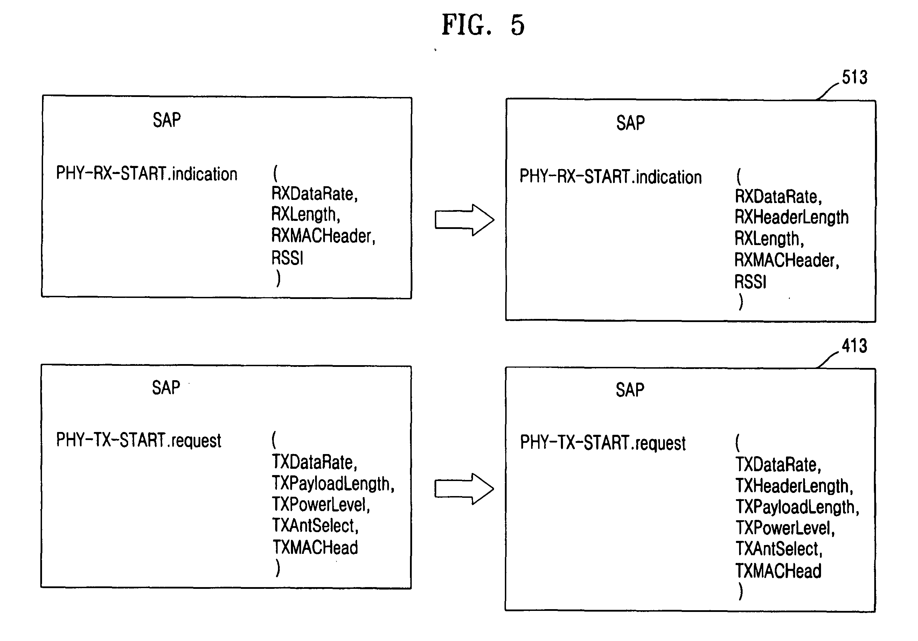

FIG. 5 illustrates SAPs 413 and 513 according to an exemplary embodiment of the present invention.

Referring to FIG. 5, the SAP 413 according to the present embodiment has another parameter, TXHeader, in addition to conventional SAP parameters.

The MAC header 1 has a length of 10 bytes, whereas the WUSB/MAC header 32 has a length of 8 bytes. Conventionally, since the MAC header 1 always had a length of 10 bytes, there has been no need to indicate the length of the header. On the other hand, according to the present invention, typical WPAN devices other than the WUSB device use a MAC header similar to the conventional MAC header 1, and the WUSB devices use the WUSB/MAC header 32. For this reason, it is necessary to identify whether the WUSB data packet includes the MAC header 1 or the WUSB/MAC header 32 when transmitting the portion corresponding to a header with a high priority.

Therefore, the SAP 413 according to the present exemplary embodiment is provided with a new parameter, TXHeaderLength. In addition, the parameter TXHeaderLength is set to 10 when the WUSB data packet includes the MAC header 1 or set to 8 when the WUSB data packet includes the WUSB/MAC header 32 based on the result in the WUSB/MAC header creation unit 422.

In other words, the packet transmission unit 411 identifies a portion corresponding to the WUSB/MAC header 32 in the WUSB data packet with reference to the header length information of the SAP and then transmits the identified portion with a high priority.

Referring to FIG. 4, the device B has a physical layer 51, a WUSB/MAC layer 52, and a WUSB application layer 53. The device B may be a WUSB host or a WUSB device. The data reception apparatus according to the present invention is installed in the device B and includes a packet reception unit 511 corresponding to a physical layer 51, a physical layer parsing unit 512, an SAP 513, a WUSB/MAC header parsing unit 521 corresponding to a WUSB/MAC layer 52, a data extraction unit 522, and a data reception unit 531 corresponding to a WUSB application layer 53. In addition, the data reception apparatus according to the present invention may further include elements for receiving data by using the conventional MAC header 2 according to the IEEE 802.15.3 standard.

The packet receipt unit 511 receives the WUSB data packet from the device A via the WUSB 6. Also, the packet reception unit 511 receives a portion corresponding to a header in the WUSB data packet and then a portion corresponding to a payload according to a transmission order defined in the packet transmission unit 411.

The physical header parsing unit 512 parses the physical header and the PLCP preamble field 31 in the WUSB data packet received in the packet reception unit 511 and outputs the result of the parsing operation to an upper layer. More specifically, the physical header parsing unit 512 outputs a portion of the WUSB data packet other than the PLCP preamble field 31 and the physical header as a result of parsing to the WUSB/MAC header parsing unit 521 corresponding to a WUSB/MAC layer 52, and establishes the SAP 513 corresponding to a physical layer 51 using a value contained in the PLCP preamble field 31 corresponding to another result of the parsing operation.

The WUSB/MAC header parsing unit 521 receives the result of the parsing operation in the physical header parsing unit 512, parses the WUSB/MAC header 32 and other fields including the security checksum field, the FCS field, the tail bit field, and the pad bit field, and outputs the result of the parsing operation to the data extraction unit 522. In particular, the WUSB/MAC header parsing unit 521 identifies whether or not the packet header received from the device A is a WUSB/MAC header 32 with reference to the SAP 513 established by the physical header parsing unit 512 and the header identification field 321 which is the first field of the WUSB/MAC header 32. As a result, if the packet header received from the device A is a WUSB/MAC header 32, the WUSB/MAC header parsing unit 521 parses the WUSB/MAC header 32 and other fields according to the format shown in FIG. 3.

Referring to FIG. 5, the SAP 513 according to the present invention has a new parameter RXHeaderLength in addition to the conventional parameters of the SAP. The parameter RXHeaderLength is set to 10 when the WUSB data packet includes the MAC header 1 or set to 8 when the WUSB data packet includes the WUSB/MAC header 32 based on the result of the physical header parsing unit 512.

In other words, the WUSB/MAC header parsing unit 521 identifies a portion corresponding to the WUSB/MAC header 32 with reference to the SAP 513 header length information established by the physical header parsing unit 512, and parses the identified portion according to the WUSB/MAC header 32 format shown in FIG. 3.

The data extraction unit 522 recognizes the payload containing data within the WUSB data packet based on the result of the parsing operation in the WUSB/MAC header parsing unit 521, extracts data from the WUSB data packet based on the result of the recognition, and outputs the extracted data to an upper layer. More specifically, the data extraction unit 522 outputs the extracted data to the data reception unit 531 corresponding to a WUSB layer 53.

The data reception unit 531 receives the data output from the data extraction unit 522. Then, a particular WUSB application processes the data received by the data reception unit 531.

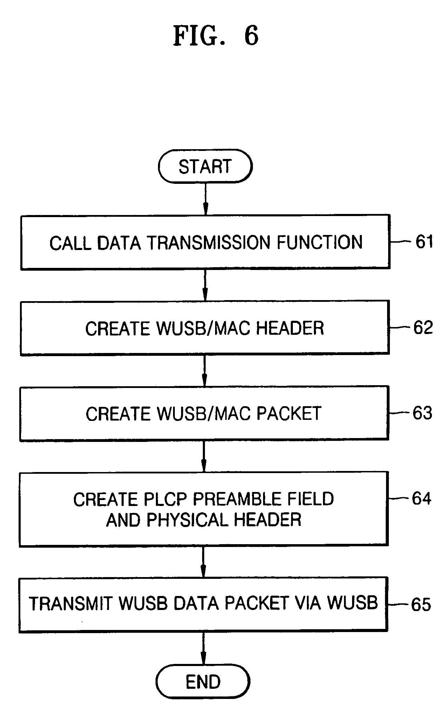

FIG. 6 is a flowchart illustrating a data transmission method according to an exemplary embodiment of the present invention.

Now, a data transmission method according to an exemplary embodiment of the present invention will be described with reference to FIG. 6, in which operations are processed in a sequential manner in the device A shown in FIG. 4, and thus, although they are omitted for convenience, the above descriptions associated with the device A can be similarly applied to the present data transmission method.

In operation 61, the device A outputs data and data transmission information to a lower layer by calling a data transmission function from the WUSB application layer 43.

In operation 62, the device A creates the WUSB/MAC header 32, which is created by integrating the MAC header and the WUSB header and includes a minimum number of fields selected from the fields contained in the MAC header 1 and the WUSB header 2 shown in FIG. 2 to transmit data to the device B via the WUSB, and then establishes the SAP 413 corresponding to a physical layer 41 by using information on the WUSB/MAC header 32. In this case, the device A creates the WUSB/MAC header 32 based on the data transmission information output in operation 61.

In operation 63, the device A creates a WUSB application payload including the data output in operation 61, and also creates the security checksum field, the FCS field, the tail bit field, and the pad bit field based on the data transmission information output in operation 61.

Then, a WUSB/MAC packet including the security checksum field, the FCS field, the tail bit field, and the pad bit field is created and output to a lower layer.

In operation 64, the device A creates the PLCP preamble field 31 and the physical header, and combines them with the WUSB/MAC packet output in operation 63 to create the WUSB data packet.

In operation 65, the device A transmits the WUSB data packet completed in operation 64 to the device B via WUSB 6 with reference to the SAP 413 established in operation 62. In this case, the device A identifies a portion corresponding to the WUSB/MAC header 32 in the WUSB data packet with reference to the SAP header length information, and the identified portion is transmitted with a high priority.

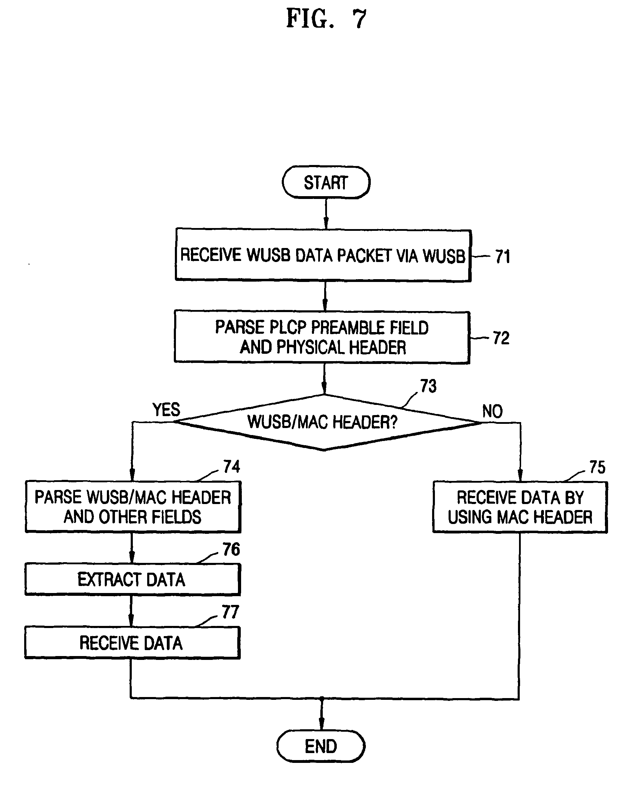

FIG. 7 is a flowchart illustrating a data reception method according to an exemplary embodiment of the present invention.

Now, a data reception method according to the present invention will be described with reference to FIG. 7, in which operations are processed in a sequential manner in the device B shown in FIG. 5, and thus, although they are omitted for convenience, the above descriptions associated with the device B can be similarly applied to the present data reception method.

In operation 71, the device B receives the WUSB data packet from the device A via the WUSB 6.

In operation 72, the device B parses the physical header and the PLCP preamble field 31 in the WUSB data packet received in operation 71, and outputs the result of the parsing operation to an upper layer.

In operation 73, the device B identifies whether or not the header of the packet received from the device A is a WUSB/MAC header 32 with reference to the SAP 513 and the value contained in the header identification field, the first field in the WUSB/MAC header 32.

In operation 74, if the header of the packet received from the device A is a WUSB/MAC header 32, the device B parses the WUSB/MAC header 32 and other fields according to the format shown in FIG. 3 and outputs the result of the parsing operation.

In operation 75, if the header of the packet received from the device A is a MAC header 1, the device B receives data by using the MAC header 1 according to the IEEE 802.15.3 standard.

In operation 76, the device B recognizes the payload containing data in the WUSB data packet based on the result of the parsing operation 74, extracts data from the WUSB data packet based on the result of the recognition, and outputs the extracted data to an upper layer.

In operation 77, the device B receives the data output in operation 76.

Meanwhile, the aforementioned embodiments according to the invention can also be embodied as computer readable codes on a computer readable recording medium. Also, functional programs, codes, and code segments for accomplishing the present invention can be easily construed by programmers skilled in the art to which the present invention pertains. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, optical data storage devices, and carrier waves such as data transmission through the Internet.

According to an exemplary embodiment of the present invention, it is possible to reduce the packet size by using an integrated header containing a minimum number of fields selected from a plurality of fields of the headers to transmit and receive data via WUSB. As a result, it is possible to transmit the fields that are actually used at high speed and effectively use limited communication resources.

In addition, similarly to the conventional header transmission, it is possible to preferentially transmit a portion corresponding to the integrated header by introducing information on the integrated header length into the SAP of the physical layer. Also, it is possible to identify the integrated header from the conventional header by introducing a header identification field into the integrated header.

## Claims

1. A data transmission method comprising:
creating an integrated header having a number of fields selected from a plurality of fields of other headers to transmit data to an external device; and
transmitting a packet including the integrated header and a payload containing the data to the external device;
wherein the integrated header contains a minimum number of fields necessary to transmit the data via a predetermined interface, and the packet is transmitted by outputting the packet to the predetermined interface; and
**characterised in that** the predetermined interface is a wireless universal serial bus WUSB, and
the integrated header comprises a combination of fields of a media access control MAC header and a WUSB header,
wherein the fields included in the integrated header include a source identification field and a destination identification field of the MAC header, and a bitmap attribute field and a bitmap status field of the WUSB header.

2. The data transmission method according to claim 1, wherein the integrated header further includes a header identification field containing identification information for identifying the at least one integrated header.

3. The data transmission method according to claim 1 or 2, wherein the transmission of the packet including the integrated header and the payload containing the data comprises:
identifying a portion of a packet corresponding to the integrated header with reference to header length information in a service access point SAP of a physical layer; and
transmitting the identified portion to the external device with a high priority.

4. A data transmission apparatus, comprising:
a header creation unit (412) which is operable to create an integrated header having a number of fields selected from a plurality of fields of other headers to transmit data to an external device via a predetermined interface and wherein the intergrated header contains a minimum number of fields necessary to transmit the data via the predetermined interface; and
a packet transmission unit (411) which is adapted to transmit a packet including the integrated header created in the header creation unit and a payload containing the data to the external device via the predetermined interface;
**characterised in that** the predetermined interface is a wireless universal serial bus WUSB, and
the headers comprise a combination of fields of a media access control MAC header and a WUSB header,
wherein the fields of the integrated header include a source identification field and a destination identification field of the MAC header, and a bitmap attribute field and a bitmap status field of the WUSB header.

5. A computer readable recording medium recording a program for executing a data transmission method, said data transmission method comprising:
creating an integrated header having a number of fields selected from a plurality fields of other headers to transmit data to an external device; and
transmitting a packet including the integrated header and a payload containing the data to the device,
wherein the integrated header contains a minimum number of fields necessary to transmit the data via a predetermined interface, and the packet is transmitted by outputting the packet to the predetermined interface,
**characterised in that** the predetermined interface is a wireless universal serial bus WUSB, and
the integrated header comprises a combination of fields of a media access control MAC header and a WUSB header,
wherein the fields of the integrated header include a source identification field and a destination identification field of the MAC header, and a bitmap attribute field and a bitmap status field of the WUSB header.

6. A data reception method comprising:
parsing an integrated header having a number of fields selected from a plurality of fields of other headers to receive data from an external device; and
extracting the data from a packet including the integrated header and a payload containing the data based on the result of the parsing operation;
further comprising receiving the packet from the external device via a predetermined interface, wherein
the parsing is performed for the integrated header, said integrated header having a minimum number of fields necessary to receive the data via the predetermined interface;
**characterised in that** the predetermined interface is a wireless universal serial bus WUSB, and
the headers comprise a media access control MAC header and a WUSB header,
wherein the fields of the integrated header include a source identification field and a destination identification field of the MAC header, and a bitmap attribute field and a bitmap status field of the WUSB header.

7. The data reception method according to claim 6, wherein the parsing comprises identifying whether or not a header of the packet received from the external device is the integrated header with reference to a header identification field containing information for identifying the integrated header.

8. A data reception apparatus comprising :
a header parsing unit which is configured to parse an integrated header having a number of fields selected from a plurality of fields of other headers to receive data from an external device; and
a data extraction unit (522) which is configured to extract the data from a packet including the integrated header and a payload containing the data based on the result of the parsing operation in the header parsing unit,
wherein the integrated header contains a minimum number of fields necessary to transmit the data via the predetermined interface;
**characterised in that** the predetermined interface is a wireless universal serial bus WUSB, and
the headers comprise a media access control MAC header and a WUSB header,
wherein the fields of the integrated header include a source identification field and a destination identification field of the MAC header, and a bitmap attribute field and a bitmap status field of the WUSB header.

9. A computer readable recording medium recording a program for executing a data reception method, said data reception method comprising:
parsing an integrated header having a number of fields selected from a plurality of fields of other headers to obtain data from an external device; and
extracting the data from a packet including the integrated header and a payload containing the data based on the result of the parsing operation further comprising receiving the packet from the external device via a predetermined interface, wherein
the parsing is performed for the integrated header, said integrated header having a minimum number of fields necessary to receive the data via the predetermined interface;
**characterised in that** the predetermined interface is a wireless universal serial bus WUSB, and
the headers comprise a combination of fields of a media access control MAC header and a WUSB header,
wherein the fields of the integrated header include a source identification field and a destination identification field of the MAC header, and a bitmap attribute field and a bitmap status field of the WUSB header.

10. A data transmission/ reception method comprising:
transmitting a packet, including an integrated header having a number of fields selected from a plurality of fields of other headers to receive data from an external device via a predetermined interface and a payload containing the data, via the predetermined interface; and
receiving the packet transmitted via the predetermined interface, parsing the integrated header included in the received packet, and extracting the data from the packet including the integrated header and the payload containing the data based on the result of the parsing operation,
wherein the integrated header contains a minimum number of fields necessary to transmit the data via the predetermined interface;
**characterised in that** the predetermined interface is a wireless universal serial bus WUSB, and
the integrated header comprises a combination of fields of a media access control MAC header and a WUSB header,
wherein the fields of the integrated header include a source identification field and a destination identification field of the MAC header, and a bitmap attribute field and a bitmap status field of the WUSB header.

11. A computer readable recording medium recording a program for executing a data transmission/ reception method, said transmission/reception method comprising:
transmitting a packet, including an integrated header having a number of fields selected from a plurality of fields of other headers to receive data from an external device via a predetermined interface and a payload containing the data, via the predetermined interface; and
receiving the packet transmitted via the predetermined interface, parsing the integrated header included in the received packet, and extracting the data from the packet including the integrated header and the payload containing the data based on the result of the parsing operation,
wherein the integrated header contains a minimum number of fields necessary to transmit the data;
**characterised in that** the predetermined interface is a wireless universal serial bus WUSB, and
the integrated header comprises a combination of fields of a media access control MAC header and a WUSB header,
wherein the fields of the integrated header include a source identification field and a destination identification field of the MAC header, and a bitmap attribute field and a bitmap status field of the WUSB header.

12. An integrated header adapted to be used in a packet including the integrated header and a payload containing data, said integrated header comprising a number of fields, wherein said number of fields are, selected from a plurality of fields of other headers and said number of fields is the minimum number of fields necessary for transmission and reception of the data via a predetermined interface,
**characterised in that** the predetermined interface is a wireless universal serial bus WUSB, and the headers comprise a combination of fields of a media access control MAC header and a WUSB header,
wherein the fields of the integrated header include a source identification field and a destination identification field of the MAC header, and a bitmap attribute field and a bitmap status field of the WUSB header.

## Patentansprüche

1. Datenübertragungsverfahren, umfassend:
Erzeugen eines integrierten Headers mit einer Anzahl von Feldern ausgewählt, aus mehreren Feldern von anderen Headern zum Übertragen von Daten an eine externe Einrichtung und
Übertragen eines den integrierten Header enthaltenden Pakets und einer die Daten enthaltenden Nutzlast an die externe Einrichtung;
wobei der integrierte Header eine Mindestanzahl von Feldern enthält, die erforderlich sind, um die Daten über eine vorbestimmte Schnittstelle zu übertragen, und das Paket durch Ausgeben des Pakets an die vorbestimmte Schnittstelle übertragen wird; und
**dadurch gekennzeichnet, dass** die vorbestimmte Schnittstelle ein drahtloser universeller serieller Bus WUSB ist und
der integrierte Header eine Kombination von Feldern eines MAC-Headers (Media Access Control - Medienzugangskontrolle) und eines WUSB-Headers umfasst,
wobei die in dem integrierten Header enthaltenen Felder ein Quellidentifikationsfeld und ein Zielidentifikationsfeld des MAC-Headers und ein Bitmap-Attribut-Feld und ein Bitmap-Status-Feld des WUSB-Headers enthalten.

2. Datenübertragungsverfahren nach Anspruch 1, wobei der integrierte Header weiterhin ein Headeridentifikationsfeld enthält, das Identifikationsinformationen zum Identifizieren des mindestens einen integrierten Headers enthält.

3. Datenübertragungsverfahren nach Anspruch 1 oder 2, wobei die Übertragung des den integrierten Header und die die Daten enthaltende Nutzlast enthaltenden Pakets Folgendes umfasst:
Identifizieren eines Abschnitts eines Pakets entsprechend dem integrierten Header unter Bezugnahme auf Headerlängeninformationen in einem Dienstzugangspunkt SAP einer physikalischen Schicht und
Übertragen des identifizierten Abschnitts an die externe Einrichtung mit einer hohen Priorität.

4. Datenübertragungsvorrichtung, umfassend:
eine Headererzeugungseinheit (412), die betrieben werden kann zum Erzeugen eines integrierten Headers mit einer Anzahl von Feldern, ausgewählt aus mehreren Feldern von anderen Headern zum Übertragen von Daten an eine externe Einrichtung über eine vorbestimmte Schnittstelle und
wobei der integrierte Header eine Mindestanzahl von Feldern enthält, die erforderlich sind, um die Daten über eine vorbestimmte Schnittstelle zu übertragen; und
eine Paketübertragungseinheit (411), die dafür ausgelegt ist, ein Paket, das den in der Headererzeugungseinheit erzeugten integrierten Header und eine die Daten enthaltende Nutzlast enthält, an die externe Einrichtung über die vorbestimmte Schnittstelle zu übertragen;
**dadurch gekennzeichnet, dass** die vorbestimmte Schnittstelle ein drahtloser universeller serieller Bus WUSB ist und
die Header eine Kombination von Feldern eines MAC-Headers (Media Access Control - Medienzugangskontrolle) und eines WUSB-Headers umfassen,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

5. Computerlesbares Aufzeichnungsmedium, das ein Programm zum Ausführen eines Datenübertragungsverfahrens aufzeichnet, wobei das Datenübertragungsverfahren Folgendes umfasst:
Erzeugen eines integrierten Headers mit einer Anzahl von Feldern, ausgewählt aus mehreren Feldern von anderen Headern zum Übertragen von Daten an eine externe Einrichtung und
Übertragen eines den integrierten Header enthaltenden Pakets und einer die Daten enthaltenden Nutzlast an die externe Einrichtung;
wobei der integrierte Header eine Mindestanzahl von Feldern enthält, die erforderlich sind, um die Daten über eine vorbestimmte Schnittstelle zu übertragen, und das Paket durch Ausgeben des Pakets an die vorbestimmte Schnittstelle übertragen wird; und
**dadurch gekennzeichnet, dass** die vorbestimmte Schnittstelle ein drahtloser universeller serieller Bus WUSB ist und
der integrierte Header eine Kombination von Feldern eines MAC-Headers (Media Access Control - Medienzugangskontrolle) und eines WUSB-Headers umfasst,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

6. Datenempfangsverfahren, umfassend:
Parsen eines integrierten Headers mit einer Anzahl von Feldern, ausgewählt aus mehreren Feldern von anderen Headern, um Daten von einer externen Einrichtung zu empfangen; und
Extrahieren der Daten aus einem Paket, das den integrierten Header und eine die Daten enthaltende Nutzlast enthält, auf der Basis des Ergebnisses der Parsing-Operation;
weiterhin umfassend das Empfangen des Pakets von der externen Einrichtung über eine vorbestimmte Schnittstelle, wobei
das Parsen für den integrierten Header durchgeführt wird, wobei der integrierte Header eine Mindestanzahl von Feldern aufweist, die erforderlich sind, um die Daten über die vorbestimmte Schnittstelle zu empfangen;
**dadurch gekennzeichnet, dass** die vorbestimmte Schnittstelle ein drahtloser universeller serieller Bus WUSB ist und
die Header einen MAC-Header (Media Access Control - Medienzugangskontrolle) und einen WUSB-Header umfassen,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

7. Datenempfangsverfahren nach Anspruch 6, wobei das Parsen das Identifizieren umfasst, ob ein Header des von der externen Einrichtung empfangenen Pakets der integrierte Header ist, unter Bezugnahme auf ein Headeridentifikationsfeld, das Informationen zum Identifizieren des integrierten Headers enthält.

8. Datenempfangsvorrichtung, umfassend:
eine Header-Parsing-Einheit, die konfiguriert ist zum Parsen eines integrierten Headers mit einer Anzahl von Feldern, ausgewählt aus mehreren Feldern von anderen Headern, um Daten von einer externen Einrichtung zu empfangen; und
eine Datenextraktionseinheit (522), die konfiguriert ist zum Extrahieren der Daten von einem Paket, das den integrierten Header und eine die Daten enthaltende Nutzlast enthält, auf der Basis des Ergebnisses der Parsing-Operation in der Header-Parsing-Einheit,
wobei der integrierte Header eine Mindestanzahl von Feldern enthält, die erforderlich sind, um die Daten über die vorbestimmte Schnittstelle zu übertragen;
**dadurch gekennzeichnet, dass** die vorbestimmte Schnittstelle ein drahtloser universeller serieller Bus WUSB ist und
die Header einen MAC-Header (Media Access Control - Medienzugangskontrolle) und einen WUSB-Header umfassen,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

9. Computerlesbares Aufzeichnungsmedium, das ein Programm zum Ausführen eines Datenempfangsverfahrens aufzeichnet, wobei das Datenempfangsverfahren Folgendes umfasst:
Parsen eines integrierten Headers mit einer Anzahl von Feldern, ausgewählt aus mehreren Feldern von anderen Headern, um Daten von einer externen Einrichtung zu empfangen; und
Extrahieren der Daten aus einem Paket, das den integrierten Header und eine die Daten enthaltende Nutzlast enthält, auf der Basis des Ergebnisses der Parsing-Operation, weiterhin umfassend das Empfangen des Pakets von der externen Einrichtung über eine vorbestimmte Schnittstelle, wobei das Parsen für den integrierten Header durchgeführt wird, wobei der integrierte Header eine Mindestanzahl von Feldern aufweist, die erforderlich sind, um die Daten über die vorbestimmte Schnittstelle zu empfangen;
**dadurch gekennzeichnet, dass** die vorbestimmte Schnittstelle ein drahtloser universeller serieller Bus WUSB ist und
die Header eine Kombination von Feldern eines MAC-Headers (Media Access Control - Medienzugangskontrolle) und eines WUSB-Headers umfassen,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

10. Datenübertragungs-/-empfangsverfahren, umfassend:
Übertragen eines Pakets mit einem integrierten Header mit einer Anzahl von Feldern, ausgewählt aus mehreren Feldern von anderen Headern zum Empfangen von Daten von einer externen Einrichtung über eine vorbestimmte Schnittstelle und einer die Daten enthaltenden Nutzlast über die vorbestimmte Schnittstelle und
Empfangen des über die vorbestimmte Schnittstelle übertragenen Pakets, Parsen des in dem empfangenen Pakets enthaltenen integrierten Headers und
Extrahieren der Daten aus dem Paket, das den integrierten Header und die die Daten enthaltende Nutzlast enthält, auf der Basis des Ergebnisses der Parsing-Operation,
wobei der integrierte Header eine Mindestanzahl von Feldern enthält, die erforderlich sind, um die Daten über die vorbestimmte Schnittstelle zu übertragen;
**dadurch gekennzeichnet, dass** die vorbestimmte Schnittstelle ein drahtloser universeller serieller Bus WUSB ist und
der integrierte Header eine Kombination von Feldern eines MAC-Headers (Media Access Control - Medienzugangskontrolle) und eines WUSB-Headers umfasst,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

11. Computerlesbares Aufzeichnungsmedium, das ein Programm zum Ausführen eines Datenübertragungs-/- empfangsverfahrens aufzeichnet, wobei das Übertragungs-/Empfangsverfahren Folgendes umfasst:
Übertragen eines Pakets mit einem integrierten Header mit einer Anzahl von Feldern, ausgewählt aus mehreren Feldern von anderen Headern zum Empfangen von Daten von einer externen Einrichtung über eine vorbestimmte Schnittstelle und einer die Daten enthaltenden Nutzlast über die vorbestimmte Schnittstelle und
Empfangen des über die vorbestimmte Schnittstelle übertragenen Pakets, Parsen des in dem empfangenen Pakets enthaltenen integrierten Headers und
Extrahieren der Daten aus dem Paket, das den integrierten Header und die die Daten enthaltende Nutzlast enthält, auf der Basis des Ergebnisses der Parsing-Operation,
wobei der integrierte Header eine Mindestanzahl von Feldern enthält, die erforderlich sind, um die Daten zu übertragen;
**dadurch gekennzeichnet, dass** die vorbestimmte Schnittstelle ein drahtloser universeller serieller Bus WUSB ist und
der integrierte Header eine Kombination von Feldern eines MAC-Headers (Media Access Control - Medienzugangskontrolle) und eines WUSB-Headers umfasst,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

12. Integrierter Header, der ausgelegt ist zur Verwendung in einem Paket mit dem integrierten Header und einer Daten enthaltenden Nutzlast, wobei der integrierte Header eine Anzahl von Feldern umfasst, wobei die Anzahl von Feldern ausgewählt sind aus mehreren Feldern von anderen Headern und die Anzahl von Feldern die Mindestanzahl von Feldern ist, die für die Übertragung und den Empfang der Daten über eine vorbestimmte Schnittstelle erforderlich sind, **dadurch gekennzeichnet, dass** die vorbestimmte Schnittstelle ein drahtloser universeller serieller Bus WUSB ist und
die Header eine Kombination von Feldern eines MAC-Headers und eines WUSB-Header (Media Access Control - Medienzugangskontrolle) umfassen,
wobei die Felder des integrierten Headers ein Quellidentifikationsfeld und ein Zielidentifikationsfeld des MAC-Headers und ein Bitmap-Attribut-Feld und ein Bitmap-Status-Feld des WUSB-Headers enthalten.

## Revendications

1. Procédé de transmission de données, consistant à :
créer un en-tête intégré ayant un certain nombre de champs sélectionnés parmi une pluralité de champs d'autres en-têtes pour transmettre des données à un dispositif externe ; et
transmettre au dispositif externe un paquet comportant l'en-tête intégré et une charge utile contenant les données ;
dans lequel l'en-tête intégré contient un nombre minimum de champs nécessaire pour transmettre les données par l'intermédiaire d'une interface prédéterminée, et le paquet est transmis en délivrant le paquet à l'interface prédéterminée ; et
**caractérisé en ce que** l'interface prédéterminée est un bus série universel sans fil ou WUSB ; et
l'en-tête intégré comprend une combinaison de champs d'un en-tête de contrôle d'accès au support ou MAC, et d'un en-tête WUSB,
dans lequel les champs compris dans l'en-tête intégré comprennent un champ d'identification de source et un champ d'identification de destination de l'en-tête MAC, et un champ d'attribut binaire et un champ d'état binaire de l'en-tête WUSB.

2. Procédé de transmission de données selon la revendication 1, dans lequel l'en-tête intégré comprend en outre un champ d'identification d'en-tête contenant des informations d'identification permettant d'identifier l'au moins un en-tête intégré.

3. Procédé de transmission de données selon la revendication 1 ou 2, dans lequel la transmission du paquet comprenant l'en-tête intégré et la charge utile contenant les données consiste à :
identifier une partie d'un paquet correspondant à l'en-tête intégré en référence à des informations de longueur d'en-tête dans un point d'accès aux services ou SAP d'une couche physique ; et
transmettre la partie identifiée au dispositif externe avec une priorité élevée.

4. Appareil de transmission de données comprenant :
une unité de création d'en-tête (412) qui a pour fonction de créer un en-tête intégré ayant un certain nombre de champs sélectionnés parmi une pluralité de champs d'autres en-têtes pour transmettre des données à un dispositif externe par l'intermédiaire d'une interface prédéterminée et dans lequel l'en-tête intégré contient un nombre minimum de champs nécessaires pour transmettre les données par l'intermédiaire de l'interface prédéterminée ; et
une unité de transmission de paquets (411) qui est apte à transmettre au dispositif externe un paquet comprenant l'en-tête intégré créé dans l'unité de création d'en-tête et une charge utile contenant les données par l'intermédiaire de l'interface prédéterminée ;
**caractérisé en ce que** l'interface prédéterminée est un bus série universel sans fil ou WUSB ; et
les en-têtes comprennent une combinaison de champs d'un en-tête de contrôle d'accès au support ou MAC, et d'un en-tête WUSB ;
dans lequel les champs de l'en-tête intégré comprennent un champ d'identification de source et un champ d'identification de destination de l'en-tête MAC, et un champ d'attribut binaire et un champ d'état binaire de l'en-tête WUSB.

5. Support d'enregistrement lisible par ordinateur enregistrant un programme destiné à exécuter un procédé de transmission de données, ledit procédé de transmission de données consistant à :
créer un en-tête intégré ayant un certain nombre de champs sélectionnés parmi une pluralité de champs d'autres en-tête pour transmettre des données à un dispositif externe ; et
transmettre au dispositif un paquet comprenant l'en-tête intégré et une charge utile contenant les données ;
dans lequel l'en-tête intégré contient un nombre minimum de champs nécessaires pour transmettre les données par l'intermédiaire d'une interface prédéterminée, et le paquet est transmis en délivrant le paquet à l'interface prédéterminée ;
**caractérisé en ce que** l'interface prédéterminée est un bus série universel sans fil ou WUSB ; et
l'en-tête intégré comprend une combinaison de champs d'un en-tête de contrôle d'accès au support ou MAC, et d'un en-tête WUSB ;
dans lequel les champs de l'en-tête intégré comprennent un champ d'identification de source et un champ d'identification de destination de l'en-tête MAC, et un champ d'attribut binaire et un champ d'état binaire de l'en-tête WUSB.

6. Procédé de réception de données, consistant à :
analyser syntaxiquement un en-tête intégré ayant un certain nombre de champs sélectionnés parmi une pluralité de champs d'autres en-têtes pour recevoir des données d'un dispositif externe ; et
extraire les données d'un paquet comprenant l'en-tête intégré et une charge utile contenant les données sur la base du résultat de l'opération d'analyse syntaxique ;
consistant en outre à recevoir le paquet du dispositif externe par l'intermédiaire d'une interface prédéterminée, dans lequel
l'analyse syntaxique est effectuée pour l'en-tête intégré, ledit en-tête intégré ayant un nombre minimum de champs nécessaires pour recevoir les données par l'intermédiaire de l'interface prédéterminée ;
**caractérisé en ce que** l'interface prédéterminée est un bus série universel sans fil ou WUSB ; et
les en-têtes comprennent un champ de contrôle d'accès au support ou MAC et un en-tête WUSB,
dans lequel les champs de l'en-tête intégré comprennent un champ d'identification de source et un champ d'identification de destination de l'en-tête MAC, et un champ d'attribut binaire et un champ d'état binaire de l'en-tête WUSB.

7. Procédé de réception de données selon la revendication 6, dans lequel l'analyse syntaxique consiste à vérifier si oui ou non un en-tête du paquet reçu du dispositif externe est l'en-tête intégré en référence à un champ d'identification d'en-tête contenant des informations destinées à identifier l'en-tête intégré.

8. Appareil de réception de données comprenant :
une unité d'analyse syntaxique d'en-tête qui est configurée pour analyser syntaxiquement un en-tête intégré ayant un certain nombre de champs sélectionnés parmi une pluralité de champs d'autres en-têtes pour recevoir des données d'un dispositif externe ; et
une unité d'extraction de données (522) qui est configurée pour extraire des données d'un paquet comprenant l'en-tête intégré et une charge utile contenant les données sur la base du résultat de l'opération d'analyse syntaxique effectuée dans l'unité d'analyse syntaxique d'en-tête ;
dans lequel l'en-tête intégré comprend un nombre minimum de champs nécessaires pour transmettre les données par l'intermédiaire de l'interface prédéterminée ;
**caractérisé en ce que** l'interface prédéterminé est un bus série universel sans fil ou WUSB ; et
les en-têtes comprennent un en-tête de contrôle d'accès au support ou MAC et un en-tête WUSB ;
dans lequel les champs de l'en-tête intégré comprennent un champ d'identification de source et un champ d'identification de destination de l'en-tête MAC, et un champ d'attribut binaire et un champ d'état binaire de l'en-tête WUSB.

9. Support d'enregistrement lisible par ordinateur enregistrant un programme destiné à exécuter un procédé de réception de données, ledit procédé de réception de données consistant à :
analyser syntaxiquement un en-tête intégré ayant un certain nombre de champs sélectionnés parmi une pluralité de champs d'autres en-têtes pour obtenir des données d'un dispositif externe ; et
extraire les données d'un paquet comprenant l'en-tête intégré et une charge utile contenant les données sur la base du résultat de l'opération d'analyse syntaxique, consistant en outre à recevoir le paquet du dispositif externe par l'intermédiaire d'une interface prédéterminée ; dans lequel
l'analyse syntaxique est effectuée pour l'en-tête intégré, ledit en-tête intégré ayant un nombre minimum de champs nécessaires pour recevoir les données par l'intermédiaire de l'interface prédéterminée ;
**caractérisé en ce que** l'interface prédéterminée est un bus série universel ou WUSB ; et
les en-têtes comprennent une combinaison de champs d'un en-tête de contrôle d'accès au support ou MAC, et d'un en-tête WUSB ;
dans lequel les champs de l'en-tête intégré comprennent un champ d'identification de source et un champ d'identification de destination de l'en-tête MAC, et un champ d'attribut binaire et un champ d'état binaire de l'en-tête WUSB.

10. Procédé de transmission/réception de données, consistant à :
transmettre un paquet, comprenant un en-tête intégré ayant un certain nombre de champs sélectionnés parmi une pluralité de champs d'autres en-têtes pour recevoir des données d'un dispositif externe par l'intermédiaire d'une interface prédéterminée et une charge utile contenant les données, par l'intermédiaire de l'interface prédéterminée ; et
recevoir le paquet transmis par l'intermédiaire de l'interface prédéterminée, analyser syntaxiquement l'en-tête intégré compris dans le paquet reçu, et extraire les données du paquet comprenant l'en-tête intégré et la charge utile contenant les données sur la base du résultat de l'opération d'analyse syntaxique ;
dans lequel l'en-tête intégré contient un nombre minimum de champs nécessaire pour transmettre les données par l'intermédiaire de l'interface prédéterminée ;
**caractérisé en ce que** l'interface prédéterminée est un bus série universel sans fil ou WUSB ; et
l'en-tête intégré comprend une combinaison de champs d'un en-tête de contrôle d'accès au support ou MAC, et d'un en-tête WUSB ;
dans lequel les champs de l'en-tête intégré comprennent un champ d'identification de source et un champ d'identification de destination de l'en-tête MAC, et un champ d'attribut binaire et un champ d'état binaire de l'en-tête WUSB.

11. Support d'enregistrement lisible par ordinateur enregistrant un programme destiné à exécuter un procédé de transmission/réception, ledit procédé de transmission/réception consistant à :
transmettre un paquet comprenant un en-tête intégré ayant un certain nombre de champs sélectionnés parmi une pluralité de champs d'autres en-têtes pour recevoir des données d'un dispositif externe par l'intermédiaire d'une interface prédéterminée et une charge utile contenant les données, par l'intermédiaire de l'interface prédéterminée ; et
recevoir le paquet transmis par l'intermédiaire de l'interface prédéterminée, analyser syntaxiquement l'en-tête intégré compris dans le paquet reçu, et
extraire les données du paquet comprenant l'en-tête intégré et la charge utile contenant les données sur la base du résultat de l'opération d'analyse syntaxique ;
dans lequel l'en-tête intégré contient un nombre minimum de champs nécessaires pour transmettre les données ;
**caractérisé en ce que** l'interface prédéterminée est un bus série universel sans fil ou WUSB ; et
l'en-tête intégré comprend une combinaison de champs d'un en-tête de contrôle d'accès aux supports ou MAC, et d'un en-tête WUSB ;
dans lequel les champs de l'en-tête intégré comprennent un champ d'identification de source et un champ d'identification de destination de l'en-tête MAC, et un champ d'attribut binaire et un champ d'état binaire de l'en-tête WUSB.

12. En-tête intégré apte à être utilisé dans un paquet comprenant l'en-tête intégré et une charge utile contenant des données, ledit en-tête intégré comprenant un certain nombre de champs, dans lequel ce certain nombre de champs sont sélectionnés parmi une pluralité de champs d'autres en-têtes et ledit nombre de champs est le nombre minimum de champs nécessaires pour la transmission et la réception des données par l'intermédiaire d'une interface prédéterminée,
**caractérisé en ce que** l'interface prédéterminée est un bus série universel ou WUSB, et
les en-têtes comprennent une combinaison de champs d'un en-tête de contrôle d'accès au support ou MAC et d'un en-tête WUSB,
dans lequel les champs de l'en-tête intégré comprennent un champ d'identification de source et un champ d'identification de destination de l'en-tête MAC, et un champ d'attribut binaire et un champ d'état binaire de l'en-tête WUSB.
